# NEUE EUROPÄISCHE PATENTSCHRIFT

(11) **EP 1 412 603 B2**
(45) Veröffentlichungstag und Bekanntmachung des Hinweises auf die Entscheidung über den Einspruch: **14.09.2011**
(45) Hinweis auf die Patenterteilung: 19.12.2007
(21) Anmeldenummer: 02754324.8
(22) Anmeldetag: 06.07.2002
(51) Int. Cl.: E05F 15/00, B60R 1/074, B62D 15/02, F16H 61/32

(54) **GETRIEBE-ANTRIEBSEINHEIT MIT DREHZAHLERFASSUNG**
GEAR DRIVE UNIT WITH SPEED MEASUREMENT
UNITE D'ENTRAINEMENT DE TRANSMISSION AVEC DETECTION DE LA VITESSE DE ROTATION

(30) Priorität: 18.07.2001 DE 10134937
(43) Veröffentlichungstag der Anmeldung: 28.04.2004
(73) Patentinhaber: ROBERT BOSCH GMBH, 70442 Stuttgart (DE)
(72) Erfinder: MEYER, Marcus, 76359 Pfaffenrot (DE); RECK, Stefan, 77815 Buehl (DE); HERP, Juergen, 77815 Buehl (DE); KLIFFKEN, Markus, 77815 Buehl (DE); SCHAIBLE, Dietmar, 71088 Holzgerlingen (DE); KOTTHAUS, Stefan, 76547 Sinzheim (DE); MOSKOB, Frank, 76131 Karlsruhe (DE); HUCK, Thomas, 77836 Rheinmuenster (DE); SOELLNER, Michael, 77839 Lichtenau (DE); HAGER, Martin, F-14125 Moneville (FR)
(86) Internationale Anmeldenummer: PCT/DE2002/002482
(87) Internationale Veröffentlichungsnummer: WO 2003/008747

(56) Entgegenhaltungen:
- DE-A- 19 854 038
- DE-C- 19 935 195
- US-A- 5 636 071
- US-A- 5 825 178

## Beschreibung

### Stand der Technik

Die Erfindung betrifft eine Getriebe- Antriebseinheit mit Drehzahlerfassung, insbesondere für die Verwendung im Kraftfahrzeug nach der Gattung der unabhängigen Ansprüche.

Mit der EP 0 865 148 A1 ist eine Motor-Getriebe-Antriebseinheit zum Verstellen von Ausstattungsteilen von Kraftfahrzeugen mit einem Kommutatormotor bekannt geworden. Dabei enthält ein im Wesentlichen topfförmiges Motorgehäuse einen Motoranker mit einer aus dem Motorgehäuse verlängerten Ankerwelle. Zwischen dem Motorgehäuse und dem Getriebegehäuse wird die Ankerwelle mit einem Kalottenlager gelagert. Zwischen dem Motoranker und dem Kalottenlager ist auf der Ankerwelle ein Kollektor und ein Ringmagnet angeordnet. Der Ringmagnet ist in seinem äußeren Umfang abwechselnd in Nord- und Südrichtung magnetisiert. Das sich ändernde Magnetfeld wird von zwei 90° versetzt zueinander angeordneten Hallsensoren erfasst und von einer auf einer Elektronikplatine angeordneten Steuerelektronik ausgewertet. Dabei ragt die Elektronikplatine in das Motorgehäuse bis zur unmittelbaren Nähe des Ringmagneten hinein. Diese Anordnung der Elektronikplatine innerhalb des Motorgehäuses oder im Bereich des Bürstenhalters ist sehr umständlich und unflexibel. Außerdem verursacht das Bürstenfeuer Störungen bei der Drehzahlsensorik.

Die DE 198 54 038 A1 offenbarte eine Verstelleinrichtung, bei der auf einer Ankerwelle des Antriebsmotors ein Ringmagnet zur Drehzahlerfassung angeordnet ist. Der Ringmagnet ist axial beweglich auf der Ankerwelle angeordnet, um auch Beschleunigungskräfte in Längsrichtung der Ankerwelle zu erfassen.

Die US 5,636,071 zeigt ein Untersetzungsgetriebe eines elektrisch verstellbaren Rückspiegels, bei dem das Drehmoment eines Elektromotors über mehrere Getriebestufen auf ein Kupplungselement übertragen wird.

Die DE 19 749 009 A1, die DE 3 426 988 A1, die EP 0 932 025 A1 und die DE 19 743 129 A1 zeigen motorisch angetriebene Getriebeeinheiten, bei denen ein Sensorrad mit magnetischem Positionsgeber mit einem Getrieberad zusammenwirkt.

### Vorteile der Erfindung

Die erfindungsgemäße Vorrichtung mit den Merkmalen des unabhängigen Ansprüchs hat den Vorteil, dass die Drehzahlsensorik komplett außerhalb des Motorgehäuses angeordnet werden kann. Dadurch entfällt der erhebliche konstruktive Aufwand, die Elektronikplatine mit dem sich darauf befindenden Sensoren innerhalb des Motorgehäuses anzuordnen. Durch die Anordnung der Elektroplatine im Bereich des Getriebegehäuses können die Formate der Elektronikplatine kleiner und einfacher ausgeführt sein. Außerdem kann vorteilhafterweise der Getrieberaum einfach gegenüber dem Kollektorraum abgedichtet werden, da die Elektronikplatine nicht mehr in den Kollektorraum ragt.
Durch die freie Wahl, das Sensorrad an einer geeigneten Stelle am Antriebs- oder Abtriebsrad anzuordnen, kann die räumliche Lage der Sensorik optimal an das jeweilige Gehäuse der Getriebe-Antriebseinheit angepaßt werden. Durch die räumliche Entfernung zum Kollektor werden Störeinflüsse durch diesen auf die Sensorik verhindert. Die frei wählbare Positionierung des Sensorrads entlang des Antriebs- oder Abtriebsrads erlaubt eine ideale Raumausnutzung und Gestaltung der Getriebe-Antriebseinheit. Durch den Verzicht auf den Ringmagneten wird die Baulänge der Ankerwelle, und damit auch der gesamten Getriebe-Antriebseinheit verringert. Dies ist von besonderer Bedeutung bei der Anwendung zur Sitzverstellung oder beim Schiebedach, da hier der zu Verfügung stehende Bauraum begrenzt ist.

Das Antriebsrad ist als eine auf der Ankerwelle angeordnete Schnecke ausgeführt. Das als Schneckenrad ausgeführte Sensorrad kann dann direkt mit der Schnecke kämmen. Je nach gewünschter Empfindlichkeit der Drehzahlsensorik kann dabei die Übersetzung zum Sensorrad (Anzahl der Zähne) entsprechend gewählt werden. Greift das Sensorrad auf der dem Schneckenrad gegenüberliegenden Seite in die Schnecke, so wird die Ankerwelle an dieser Stelle zusätzlich abgestützt. Das Sensorrad ist an der dem Abtriebsrad gegenüberliegenden Seite der Schnecke angeordnet weil dadurch das Sensorrad gleichzeitig die Ankerwelle abstützt. Die Ankerwelle wird gewöhnlich im Poltopf und im Übergangsbereich zwischen Motorgehäuse und Getriebegehäuse beispielsweise mittels Kalottenlager fest gelagert. Das freie Ende der Ankerwelle im Getriebegehäuse wird beispielsweise mittels eines Lagerzapfen abgestützt, um ein Ausweichen der Ankerwelle beim Auftreten eines erhöhten Lastmoments zu verhindern. Das Anformen eines solchen Lagerzapfen ist einerseits relativ aufwendig, andererseits führt eine solche Lagerung meist zu Vibrationen mit einer unerwünschten Geräuschentwicklung. Da die Schneckenverzahnung im Eingriffsbereich des Abtriebsrad sehr genau gefertigt ist, bewirkt die Anordnung des Sensorrads als Stützzahnrad auf der gegenüberliegenden Seite eine sehr exakte und geräuscharme Lagerung. Dadurch wird ein störungsfreies Ineinandergreifen der Verzahnung von Schnecke und Abtriebsrad gewährleistet und eine Beschädigung der Verzahnung oder gar ein Überspringen derselbigen sicher vermieden.

Durch die in den Unteransprüchen aufgeführten Merkmale sind vorteilhafte Weiterbildungen der Vorrichtung nach dem Ansprüch 1 möglich.

Vorteilhaft ist die Verwendung eines Magneten als Positionsgeber, da dieser in einfacher Weise an das Sensorrad angebracht werden kann, oder das Sensorrad Material aufweist, das in einfacher Weise magnetisiert werden kann. Besonders günstig ist dabei ein zweipoliger Magnet, aber auch eine mehrpolige Anordnung zur Erhöhung der Auflösung der, Drehzahlmessung ist problemlos herstellbar. Allerdings wird das Anbringen/Magnetisieren eines zweipoligen Magneten bevorzugt, da diese Ausführung deutlich kostengünstiger ist, als die Herstellung eines Ringmagneten.

Ist der Positionsgeber auf der freien Stirnseite des Sensorrads angeordnet, erlaubt dies eine größere Flexibilität bei der Anordnung der korrespondierenden Sensorsysteme. Unabhängig, ob induktive, optische oder magnetische Sensoren verwendet werden, sind diese nicht auf eine radiale Anordnung -wie bei Ringmagneten auf der Ankerwelle- beschränkt, sondern die Sensoren können direkt entlang der.freien Stirnseite des Sensorrads angeordnet werden, wodurch wesentlich mehr Bauraum für die Sensoren zur Verfügung steht.

Besonders kostengünstig und einfach in der Handhabung ist die Verwendung von Hallsensoren, die sowohl radial als auch planar zum Sensorrad angeordnet werden können. Diese Ausführung ist besonders für Anwendungen vorteilhaft, bei denen keine hochauflösende Drehzahlerfassung notwendig ist (Inkrementalsysteme).

Für die Anwendung bei hochgenauen Absolut-Winkel-Meßsysemen ist der Einsatz von magnetisch resistiven Elementen (GMR, AMR) als Sensoren besonders vorteilhaft. Gegenüber dem inkrementalen Ringmagnet-System, bei dem der Sensor nur einen Wechsel der Polarität detektieren kann, mißt das magnetisch resistive Element direkt die Ausrichtung des magnetischen Feldes, beispielsweise eines magnetischen Dipols. Hierdurch wird eine wesentlich höhere Auflösung erzielt, was beispielsweise für Verstellwege mit hohen Ganauigkeitsanforderungen exaktere Verstellungen erlaubt. Für größere Verstellwege werden die vollen Umdrehungen.des Sensorrads inkrementell registriert und die Unterteilung einer Sensorradumdrehung absolut erfaßt. Das magnetisch resistive Element (GMR, AMR) kann dabei günstigerweise planar zur Stirnseite des mindestens einen magnetischen Dipol aufweisenden Sensorrads angeordnet werden.

Von besonderem Vorteil ist es, wenn das Sensorsystem eine Vorrichtung aufweist, mit der die Winkelteilung einer Sensorrad-Umdrehung frei wählbar ist. Damit können mit einem Aufbau die Anzahl der Flanken, die das Sensorsystem während einer Sensorrad-Umdrehung abgibt, beliebig eingestellt werden. Die variable Drehwinkelteilung kann aufgrund der absoluten Drehwinkelmessung mittels elektronischer Schaltung oder per Software realisiert werden. Dies erlaubt eine optimale Anpassung der Auflösung der Drehzahlmessung an den konkreten Anwendungsfall und kann auch während des Betriebs variiert werden.

Günstig ist es, wenn die Achse des Sensorrads zu dessen Lagerung direkt in das Getriebegehäuse eingefügt wird. Dies ermöglicht eine einfache Montage mit wenig zusätzlichen Bauteilen. Die auftretenden Lagerkräfte werden vorteilhafterweise direkt an das Getriebegehäuse abgeführt.

Dadurch, dass im Motorgehäuse keinerlei Sensorik angeordnet ist und die Elektronikplatine nicht in das Motorgehäuse ragt, kann dieses in einfacher Weise wirksam gegenüber dem Getriebegehäuse abgedichtet werden, um das Eindringen von Fett in den Kollektorraum zu verhindern. Eine aufwendige und prozeßkritische Abdichtung der Elektronikplatine gegenüber dem Motorgehäuse wird dadurch vermieden. Die Elektronikplatine kann sich hierbei komplett innerhalb des Getriebegehäuses bzw. eines Elektronikgehäuses befinden und ein kleineres einfacheres Format aufweisen.

### Zeichnung

In der Zeichnung ist eine Vorrichtung zum Verständnis der Erfindung und ein Ausführungsbeispiel einer erfindungsgemäßen Vorrichtung dargestellt und in der nachfolgenden Beschreibung näher erläutert. Es zeigen:
Figur 1, eine schematische Darstellung einer Vorrichtung zum Verständnis der Erfindung,
Figur 2, einen Schnitt nach der Linie II-II in Figur 1,
Figur 3, eine schematische Darstellung eines erfindungsgemäßen Ausführungsbeispiels im Schnitt und
Figur 4 einen Schnitt nach Linie IV-IV in Figur 3.

### Beschreibung

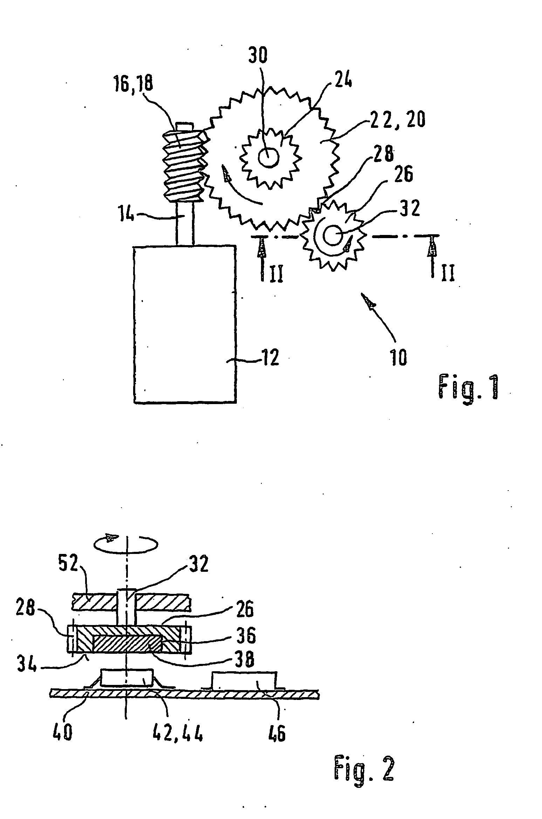

Die in den Figuren 1 und 2 dargestellte Vorrichtung weist einen Elektromotor 12 mit einer Ankerwelle 14 auf, auf der als Antriebsrad 16 drehfest eine Schnecke 18 angeordnet ist. Die Schnecke 18 kämmt mit einem als Schneckenrad 20 ausgeformten Abtriebsrad 22. Auf das Schneckenrad 20 ist drehfest ein Abtriebsritzel 24 angeformt, an dem ein Drehmoment abgegriffen werden kann. Zur Erfassung der Motordrehzahl - oder der Rotationsgeschwindigkeit - steht ein Sensorrad 26 über eine Verzahnung 28 im Eingriff mit dem Schneckenrad 20. Sowohl das Schneckenrad 20 als auch das Sensorrad 26 drehen sich auf zwei Achsen (Schneckenradachse 30, Sensorradachse 32), die jeweils drehfest in einem nicht näher dargestellten Gehäuse 52 der Getriebe-Antriebseinheit 10 angeordnet sind. Figur 2 zeigt einen Schnitt durch das Sensorrad 26, wobei dessen Achse 32 in dem nicht näher gezeigten Gehäuse 52 befestigt ist (oben in Figur 2). Das Sensorrad 26 weist eine freie Stirnseite 34 auf, an der als Positionsgeber 36 ein magnetischer Dipol 38 aufmagnetisiert ist. Dem Positionsgeber 36 unmittelbar gegenüber ist auf einer Platine 40 ein Sensor 42 angeordnet, der in diesem Ausführungsbeispiel als magnetisch resistives Element (GMR, AXR) 44 ausgeführt ist. Der Sensor 42 ist mit einer Auswertevorrichtung 46 auf der Platine 40 verbunden, die als Ausgangssignal der Drehzahlerfassung eine Abfolge von Signal-Flanken ausgibt. Das magnetisch resistive Element (GMR, AXR) 44 kann im Gegensatz zu einem Hallsensor 43 nicht nur die Umpolung eines Magnetfeldes detektieren, sondern den absoluten Drehwinkel des rotierenden magnetischen Dipols 38 messen. Die Auflösung des Drehzahlsignals ist dadurch beliebig einstellbar, indem die Winkelteilung des Sensorrads 26, das heißt die Anzahl der Signal-Flanken pro Umdrehung, mittels der Auswertevorrichtung 46 eingestellt wird. Dies kann innerhalb der Auswertevorrichtung 46 sowohl hardwaremäßig durch elektronische Schaltkreise, als auch softwaremäßig ausgeführt werden. Im Gegensatz zur herkömmlichen Drehzahlerfassung mittels Hallsensoren 43 und einem auf der Ankerwelle 14 angeordnetem Ringmagneten 37, bei dem die Empfindlichkeit ausschließlich durch die Anzahl der Polteilung des Ringmagneten 37 verändert werden kann, kann im erfindungsgemäßen Ausführungsbeispiel die Empfindlichkeit der Drehzahlerfassung sogar im Betrieb verändert werden. Dies erlaubt eine sehr einfache Anpassung der Getriebe-Antriebseinheit 10 an die jeweilige Anwendung.

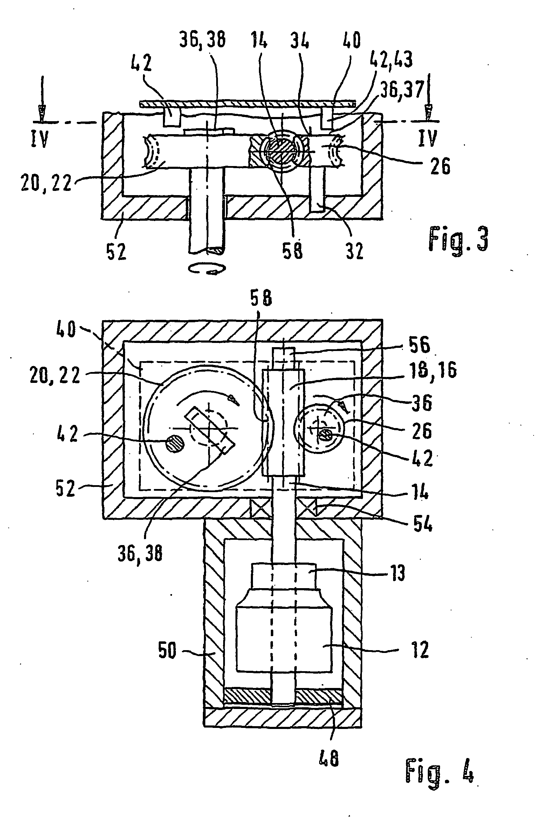

Figur 3 und 4 zeigen ein Ausführungsbeispiel einer erfindungsgemäßen Getriebe-Antriebseinheit 10, bei der das Sensorrad 26 zur Abstützung der Ankerwelle 14 dient. Die Getriebe-Antriebseinheit 10 weist einen Motor 12 mit einem Kollektor 13 und einem diese umgebende Motorgehäuse 50, sowie ein Getriebegehäuse 52 auf, das außer dem Getriebe auch die komplette Drehzahlsensorik umfaßt. Die Ankerwelle 14 ist einerseits in einem Ankerlager 48 am Boden des Motorgehäuses 50 und einem Kugellager 54 im Bereich zwischen Motorgehäuse 50 und Getriebegehäuse 52 fest gelagert. Das freie Ende 56 der Ankerwelle 14 wird zumindest radial zusätzlich durch die gegenüberliegende Anordnung des Sensorrads 26 und des Schneckenrads 20 gelagert. Durch diese Anordnung ist gewährleistet, dass die Ankerwelle 14 nicht radial aus dem Zahneingriff 58 des Schneckenrads 20 ausweichen kann. Dies gilt besonders für den Fall, wenn das Schneckenrad 20 abrupt gestoppt wird, oder sich dieses leicht verformt. Hierbei wird eine Beschädigung des Schneckenrads 20 oder ein Überspringen des Zahneingriffs 58 verhindert. In Figur 4 ist gestrichelt eine Elektronikplatine 40 dargestellt, auf der gegenüber der Stirnseite 34 des Sensorrads 26 als Sensor 42 ein Hallsensor 43 angeordnet ist. Das Sensorrad 26 ist hierbei als Kunststoffspritzteil aus Plastoferrit gefertigt (zumindest teilweise), das zu einem mehrpoligen Ringmagneten 37 magnetisiert wird. Der in unmittelbarer räumlichen Nähe zu diesem Ringmagneten 37 angeordnete Hallsensor 43 erfaßt inkremental die Polwechsel des Ringmagneten 37. Die Auflösung der Drehzahlerfassung ist somit durch die Anzahl der Polpaare des Ringmagneten 37 und durch die Zahnzahl des Sensorrads 26 gegeben.

Als Variation des Ausführungsbeispiels weist auch das Abtriebsrad 22 einen Positionsgeber 36 auf, der hier als einfacher magnetischer Dipol 38 an der Stirnseite des Abtriebsrads 22 angeformt ist. Damit übernimmt auch das Abtriebsrad 22 die Funktion eines Sensorrads 26, da auf der Platine 40 ebenfalls ein Sensor 42 angeordnet ist, der die Drehung des magnetischen Dipols 38 erfaßt. Dies ist anschaulich in Figur 3 zu erkennen. Aus Figur 4 ist ersichtlich, dass sich die gesamte Sensorik innerhalb des Getriebegehäuses 52 befindet. Dadurch ist es nicht notwendig, dass sich die Platine 40 in das Motorgehäuse 50 zum Kollektor 13 hin erstreckt, wie dies bei bisherigen Getriebe-Antriebseinheiten 10 mit Drehzahlerfassung üblicherweise der Fall ist. Deshalb ist das Getriebegehäuse 52 gegenüber dem Motorgehäuse 50 sauber abgedichtet, wodurch das Eindringen von Schmierfett des Getriebes in das Motorgehäuse 50 verhindert wird.

In weiteren Variationen der Ausführungsbeispiele kann die exakte Lage des Sensorrads 26 entlang des Antriebsrads 16, oder des Abtriebsrads 22 derart variiert werden, dass verschiedene Motorbauformen unter optimaler Raumausnutzung realisiert werden. Auch die Anzahl der Zähne des Sensorrads 26 kann zur Anpassung der Sensorik an die entsprechenden Anforderungen entsprechend gewählt werden. Auch die Ausführung des Antriebsrads 22 als Sensorrad 26 oder weitere Kombinationen einzelner erfindungsgemäßen Merkmale sind weitere Ausführungsbeispiele der Erfindung.

## Patentansprüche

1. Getriebe-Antriebseinheit (10), insbesondere für die Verwendung im Kraftfahrzeug, mit einem Antriebsrad (16), das mit einem Abtriebsrad (22) kämmt, **dadurch gekennzeichnet, dass** ein Sensorrad (26) mit einem Positionsgeber (36), der mit einem Sensor (42) zum Erfassen der Drehzahl oder der Rotationsgeschwindigkeit zusammenwirkt, mit dem Antriebsrad (16) oder dem Abtriebsrad (22) kämmt, wobei der Positionsgeber (36) an einer freien axialen Stirnseite (34) des Sensorrads (26) angeordnet ist, wobei das Antriebsrad (16) als eine auf einer Ankerwelle (14) eines Elektromotors (12) angeordnete Schnecke (18) und das Sensorrad (26) als Schneckenrad ausgebildet ist, und das Sensorrad (26) als Ankerwellenabstützung ausgebildet ist und auf der dem Abtriebsrad (22) gegenüberliegenden Seite des Antriebrads (16) eingreift.

2. Getriebe-Antriebseinheit (10) nach einem der Ansprüche 1 bis 3, **dadurch gekennzeichnet, dass** das Sensorrad (26) als Positionsgeber (36) mindestens einen 2-poligen Magneten (38) oder mindestens 2-pollg magnetisiertes Material, insbesondere Plastoferrit, aufweist.

3. Getriebe-Antriebseinheit (10) nach einem der vorgehenden Ansprüche, **dadurch gekennzeichnet, dass** der Sensor (42) ein Hallsensor (43) ist.

4. Getriebe-Antriebseinheit (10) nach einem der vorgehenden Ansprüche, **dadurch gekennzeichnet, dass** der Sensor (42) ein magnetisch resistives Element (44) Ist.

5. Getriebe-Antriebseinheit (10) nach einem der vorgehenden Ansprüche, **dadurch gekennzeichnet, dass** der Sensor (42) Signal-Flanken erzeugt und eine Vorrichtung (46) aufweist, mit der die Anzahl der Signal- Flanken, die der Sensor (42) während einer Sensorrad-Umdrehung erzeugt, frei wählbar ist

6. Getriebe-Antriebseinheit (10) nach einem der vorgehenden Ansprüche, **dadurch gekennzeichnet, dass** die Getriebe-Antriebseinheit (10) ein Getriebegehäuse (52) aufweist und das Sensorrad (26) auf einer Achse (32) angeordnet ist, die direkt in die Wand des Getriebegehäuses (52) eingefügt ist.

7. Getriebe-Antriebseinheit (10) nach einem der vorgehenden Ansprüche, **dadurch gekennzeichnet, dass** die Getriebe-Antriebseinheit (10) ein einen Elektromotor (12) - einschließlich eines Kollektors (13) - umfassendes Motorgehäuse (50) aufweist und das Sensorrad (26) und der Sensor (42) im Getriebegehäuse (52) angeordnet sind, das gegenüber dem Motorgehäuse (50) abgedichtet ist.

## Claims

1. Gearbox drive unit (10) in particular for use in a motor vehicle, having a drive wheel (16) which intermeshes with an output wheel (22), **characterized in that** a sensor wheel (26) meshes with a position sensor (36), which interacts with a sensor (42) for sensing the rotational speed, with the drive wheel (15) or with the output wheel (22) wherein the position sensor (36) is arranged at a free axial front side (34) of the sensor wheel (26), wherein the drive wheel (16) is embodied as a worm (18) which is arranged on an armature shaft (14) of an electric motor (12), and the sensor wheel (26) is embodied as a worm gear, and the sensor wheel (26) is embodied as an armature shaft support and it engages on the side of the drive wheel (16) lying opposite the output wheel (22).

2. Gearbox drive unit (10) according to Claim 1, **characterized in that** the sensor wheel (26) has, as a position sensor (36), at least a two-pole magnet (38) of at least two pole-magnetized material, in particular plastoferrite.

3. Gearbox drive unit (10) according to either of the preceding claims, **characterized in that** the sensor (42) is a Hall sensor (43).

4. Gearbox drive unit (10) according to one of the preceding claims, **characterized in that** the sensor (42) is a magnetically resistive element (44).

5. Gearbox drive unit (10) according to one of the preceding claims, **characterized in that** the sensor (42) generates signal edges and has a device (46) with which the number of signal edges which the sensor (42) generates during one revolution of the sensor wheel can be freely selected.

6. Gearbox drive unit (10) according to one of the preceding claims, **characterized in that** the gearbox drive unit (10) has a gearbox casing (52), and the sensor wheel (26) is arranged on an axle (32) which is inserted directly into the wall of the gearbox casing (52).

7. Gearbox drive unit (10) according to one of the preceding claims, **characterized in that** the gearbox drive unit (10) has a motor casing (50) which encloses an electric motor (12), including a collector (13), and the sensor wheel (26) and the sensor (42) are arranged in the gearbox casing (52) which is sealed with respect to the motor casing (50).

## Revendications

1. Unité d'entraînement de transmission (10), notamment pour une utilisation dans un véhicule automobile, avec une roue d'entraînement en entrée (16) qui s'engrène avec une roue d'entraînement en sortie (22), **caractérisée en ce qu'**une roue de capteur (26) s'engrène avec un détecteur de position (36) en interaction avec un capteur (42) pour détecter le nombre de tours ou la vitesse de rotation, avec la roue d'entraînement en entrée (16) ou la roue d'entraînement en sortie (22), le détecteur de position (36) étant disposé au niveau d'un côté avant (34) axial libre de la roue de capteur (26), la roue d'entraînement en entrée (16) prenant la forme d'un colimaçon (18) disposé sur un arbre d'ancrage (14) d'un moteur électrique (12) et la roue de capteur (26) prenant la forme d'une roue en colimaçon et la roue de capteur (26) prenant la forme d'un porte-arbre d'ancrage et s'engrenant sur le côté de la roue d'entraînement en entrée (16) opposé à la roue d'entraînement en sortie (22).

2. Unité d'entraînement de transmission (10) selon la revendication 1, **caractérisée en ce que** la roue de capteur (26) comprend, en tant que détecteur de position (36), au moins un aimant bipolaire (38) ou au moins une matière magnétisée bipolaire, notamment de la plastoferrite.

3. Unité d'entraînement de transmission (10) selon l'une quelconque des revendications précédentes, **caractérisée en ce que** le capteur (42) est un capteur d'écho (43).

4. Unité d'entraînement de transmission (10) selon l'une quelconque des revendications précédentes, **caractérisée en ce que** le capteur (42) est un élément (44) résistif sur le plan magnétique.

5. Unité d'entraînement de transmission (10) selon l'une quelconque des revendications précédentes, **caractérisée en ce que** le capteur (42) produit des flancs de signal et comprend un dispositif (46) permettant de choisir librement le nombre de flancs de signal produits par le capteur (42) pendant la rotation d'une roue de capteur.

6. Unité d'entraînement de transmission (10) selon l'une quelconque des revendications précédentes, **caractérisée en ce que** l'unité d'entraînement de transmission (10) comprend un carter de transmission (52) et que la roue de capteur (26) est disposée sur un essieu (32) directement inséré dans la paroi du carter de transmission (52).

7. Unité d'entraînement de transmission (10) selon l'une quelconque des revendications précédentes, **caractérisée en ce que** l'unité d'entraînement de transmission (10) comprend un carter de moteur (50) comprenant un moteur électrique (12) - y compris un collecteur (13 ) - et que la roue de capteur (26) et le capteur (42) sont disposés dans le carter de transmission (52) étanchéifié par rapport au carter de moteur (50).
